# EUROPÄISCHE PATENTSCHRIFT

(11) **EP 3 575 759 B1**
(45) Veröffentlichungstag und Bekanntmachung des Hinweises auf die Patenterteilung: **27.01.2021**
(21) Anmeldenummer: 18174695.9
(22) Anmeldetag: 29.05.2018
(51) Int. Cl.: G01J 3/433, G01J 3/02, H01S 5/0683, G01N 21/39

(54) **SPEKTROMETER UND VERFAHREN ZUM BETRIEB**
SPECTROMETER AND METHOD FOR OPERATION
SPECTROMÈTRE ET SON PROCÉDÉ DE FONCTIONNEMENT

(43) Veröffentlichungstag der Anmeldung: 04.12.2019
(73) Patentinhaber: SICK AG, 79183 Waldkirch (DE)
(72) Erfinder: Beyer, Dr. Thomas, 79111 Freiburg (DE)

(56) Entgegenhaltungen:
- WO-A2-2017/024046
- US-A1- 2015 268 095
- LIU J T C ET AL: "Large-Modulation-Depth 2f Spectroscopy with Diode Lasers for Rapid Temperature and Species Measurements in Gases with Blended and Broadened Spectra", APPLIED OPTICS, OPTICAL SOCIETY OF AMERICA, WASHINGTON, DC; US, Bd. 43, Nr. 35, 10. Dezember 2004 (2004-12-10), Seiten 6500-6509, XP002561503, ISSN: 0003-6935, DOI: 10.1364/AO.43.006500
- RUXTON K ET AL: "Tunable diode laser spectroscopy with wavelength modulation: Elimination of residual amplitude modulation in a phasor decomposition approach", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER BV, NL, Bd. 150, Nr. 1, 21. September 2010 (2010-09-21), Seiten 367-375, XP027278913, ISSN: 0925-4005 [gefunden am 2010-08-16]
- PHILIPPE L C ET AL: "LASER DIODE WAVELENGTH-MODULATION SPECTROSCOPY FOR SIMULTANEOUS MEASUREMENT OF TEMPERATURE, PRESSURE, AND VELOCITY IN SHOCK-HEATED OXYGEN FLOWS", APPLIED OPTICS, OPTICAL SOCIETY OF AMERICA, WASHINGTON, DC; US, Bd. 32, Nr. 30, 20. Oktober 1993 (1993-10-20), Seiten 6090-6103, XP000398609, ISSN: 0003-6935, DOI: 10.1364/AO.32.006090
- J.T.C. Liu ET AL: "Wavelength modulation absorption spectroscopy with 2 f detection using multiplexed diode lasers for rapid temperature measurements in gaseous flows", APPLIED PHYSICS B: LASERS AND OPTICS., vol. 78, no. 3-4, 1 February 2004 (2004-02-01), pages 503-511, XP055273783, DE ISSN: 0946-2171, DOI: 10.1007/s00340-003-1380-7

## Beschreibung

Die Erfindung betrifft ein Wellenlängen-Modulations-Spektrometer und ein Verfahren zum Betrieb eines solchen Spektrometers.

Die Wellenlängen-Modulations-Spektrometrie (WMS) ist eine Form von optischer Absorptionsspektroskopie, die eine Detektion von sehr kleinen optischen Absorptionen ermöglicht, weil die Absorptionsmessungen von kleinen Frequenzen (nahe DC), bei denen die Lichtquellen großes Rauschen aufweisen, zu hohen Frequenzen verschoben werden, bei denen das Schrotrauschen (shot-noise) der begrenzende Faktor ist. Diese Frequenzverschiebung kann die Messempfindlichkeit um drei bis fünf Größenordnungen verbessern. Das geschieht wie folgt.

WMS wird in der Regel mit kontinuierlich durchstimmbaren Lasern, wie Diodenlasern (TDL), durchgeführt. Dabei wird die Wellenlänge langsam über eine Absorptionslinie des Messgases durchgestimmt und zusätzlich mit einer gegenüber der langsamen Durchstimmung hohen Modulationsfrequenz f, typischerweise sinusförmig, mit einer Amplitude A moduliert. Wenn der so wellenlängenmodulierte Lichtstrahl sich durch die Messstrecke ausbreitet, ergibt sich aus der Intensitätsänderung des Laserlichts durch die Absorption des Messgases eine Amplitudenmodulation des Lichts. Wenn das Licht dann im Lichtempfänger detektiert und ein Empfangssignal in Abhängigkeit der Zeit erzeugt wird, enthält das Empfangssignal AC-Komponenten bei der Modulationsfrequenz f und seinen Obertönen 2f, 3f, 4f, etc. Für die Auswertung kann eine der AC-Komponenten ausgewählt werden und in einem phasenempfindlichen Verfahren, z. B. mit einem Lock-in-Verfahren, ausgewertet werden. Dieses Verfahren wird auch als Demodulation bezeichnet. Das bei einer Demodulation bei der Frequenz nf erhaltene Signal wird als nf-Signal bezeichnet (n=1,2,3,...). Das demodulierte Signal enthält damit Information bezüglich der optischen Absorption und der Intensität des Lichtstrahls. Über die so gemessene Absorption können Komponenten des untersuchten Messgases detektiert und/oder deren Konzentration bestimmt werden. Dazu wird häufig das 2f-Signal verwendet.

Eine detaillierte Theorie, die die WMS und die Beziehungen zwischen der Form der Absorptionslinie und der Form des demodulierten Signals beschreibt, ist in "Frequency-modulation spectroscopy for trace species detection: theory and comparison among experimental methods," Applied Optics 31, 707-717(1992) gegeben. Die Signalform, die bei der WMS erhalten wird, wenn man also langsam über die Absorptionslinie fährt und gleichzeitig die Wellenlänge bei der Frequenz nf moduliert, entspricht qualitativ der n-ten Ableitung der Absorptionslinie.

Bei der WMS wird in der Regel ein durchstimmbarer Diodenlaser eingesetzt, dessen Emissionswellenlänge mit einer Stromrampe langsam durchgefahren wird. Die für die WMS notwendige Modulation der Wellenlänge wird mit einer zusätzlichen und konstanten Strommodulation, die zusätzlich zur Stromrampe auf den Laser gegeben wird, erreicht. Theoretisch hat eine solche konstant hohe Strommodulation eine konstant hohe Wellenlängenmodulation zur Folge. Tatsächlich ist es in der Praxis aber so, dass bei stets konstanter Strommodulation bei kleinen Grundströmen eine andere Wellenlängenmodulation erzielt wird als bei größeren Grundströmen. Damit hat die konstante Strommodulation keine konstante Wellenlängenmodulation über die Stromrampe zur Folge. Derartige Änderungen der Wellenlängenmodulation entlang der Stromrampe haben einen wesentlichen Einfluss auf das nf-Signal der WMS.

Um diese Probleme zu beherrschen ist es bekannt, die Wellenlängenmodulationsänderungen in aufwändigen Messreihen bei verschiedenen Lasertemperaturen und Laserströmen zu messen und die gemessenen Änderungen in der Auswertung entsprechend zu berücksichtigen.

Aus LIU J TC ET AL: "Large-Modulation-Depth 2f Spectroscopy with Diode Lasers for Rapid Temperature and Species Measurements in Gases with Blended and Broadened Spectra", APPLIED OPTICS, Bd. 43, Nr. 35, 10. Dezember 2004 (2004-12-10), Seiten 6500-6509, XP002561503, ISSN: 0003-6935, DOI: 10.1364/AO.43.006500, ist ein "fixed wavelength" Modulations-Spektroskopieverfahren bekannt, bei dem die Modulationstiefe möglichst groß gemacht wird und störende Hintergrundeffekte durch Einstellen von Amplitude und Phase der Modulation verringerbar sind.

Aus der US 9,377,359 B1 ist es bekannt, bei der WMS störende Interferenzen, die durch optische Grenzflächen im Spektrometer auftreten, durch geschickte Wahl von Abständen der optischen Grenzflächen zu unterdrücken. Eine mögliche ungewünschte Änderung der Wellenlängenmodulation ist nicht thematisiert, sondern es wird von stets konstanter Modulation ausgegangen.

Aus der WO 2017/024046 ist ein Spektrometer und ein Verfahren nach den Oberbegriffen der Ansprüche 1 und 4 bekannt.

Ausgehend von diesem Stand der Technik ist es Aufgabe der Erfindung, ein verbessertes Spektrometer und ein Betriebsverfahren bereit zu stellen, mit dem das Problem der Wellenlängenmodulationsänderungen effektiv und in möglichst einfacher Weise begegnet werden kann.

Diese Aufgabe wird gelöst durch Spektrometer mit den Merkmalen des Anspruchs 1 und ein Verfahren mit den Merkmalen des Anspruchs 4.

Erfindungsgemäß ist ein optischer Resonator vorgesehen, durch den wenigstens ein Teil der Strahlung geführt ist. Aus der durch den Resonator geführten Strahlung ist ein Korrektursignal ableitbar, um in Abhängigkeit davon das Ansteuersignal so verändern zu können, dass die Amplitude der höherfrequenten Modulation während des Durchstimmens, also entlang der Stromrampe, veränderbar ist. Dabei ist es das Ziel, dem oben genannten Problem durch ungewollte Änderungen der Amplitude der Wellenlängenmodulation entgegen zu wirken. Mit der Erfindung wird dazu die Signalinformation der durch den Resonator geführten Strahlung genutzt.

Die Erfindung enthält somit zwei wesentliche Kerngedanken. Einmal die Erkenntnis, dass die den Resonator durchlaufende Strahlung ein Signal liefern kann, das eine Aussage über die Änderung der Modulation der Amplitude im Durchstimmbereich [λ1, λ2] liefert. Und zum anderen die Idee, ein solches Signal, insbesondere als 2f-Signal, als Maßstab für das Korrektursignal zu nutzen. Es sollte dabei klar sein, dass das Korrektursignal über den Durchstimmbereich nicht konstant sein muss, sondern sich ändern kann, also eine Funktion der langsam veränderlichen Komponente des Ansteuersignals ist. Somit kann das Korrektursignal eine Funktion der Zeit sein.

Der sich daraus ergebende Nutzen ist erheblich. Mit der Erfindung kann in vergleichsweise einfacher und reproduzierbarer Weise der ungewollten Änderung der Amplitudenmodulation entgegengewirkt werden, um dadurch ein verbessertes nf-Signal zu erhalten, um damit schließlich eine höhere Empfindlichkeit und auch eine reproduzierbarere Einstellung des Spektrometers zu erreichen.

Erfindungsgemäss das 2f-Signal, das aus dem Teil der Strahlung gewonnen wird, der den optischen Resonator durchläuft, als Maßstab für das Korrektursignal. Ohne Messgas, also ohne Absorption, kann das Korrektursignal über den Durchstimmbereich dann in einfacher Weise so angepasst werden, dass das nf-Signal über den gesamten Durchstimmbereich, bzw. die gesamte Stromrampe, keine Anteile des typischen Spektrums des optischen Resonators mehr enthält (beschrieben durch die sogenannte Airy-Funktion). Im Idealfall liegt das nf-Signal möglichst gut auf Null.

Erfindungsgemäss ist der optische Resonator Teil eines separaten Messkanals, der von einem Teil der Strahlung durchlaufen wird, wobei dieser Teil vorzugsweise mittels eines Strahlteilers im Strahlengang erhalten ist

In der Regel wiederholt sich die ungewollte Änderung der Amplitudenmodulation über den Durchstimmbereich bei jedem Durchlauf der Stromrampe gleich, so dass ein einmaliges Einstellen ausreicht, um den Verlauf des Korrektursignals über den Durchstimmbereich, also entlang der Stromrampe, einzustellen. Es ist denkbar, dass das Korrektursignal manuell in die Auswerte- und Steuereinheit eingegeben wird. Das kann zum Beispiel dadurch geschehen, dass vor dem erstmaligen Gebrauch, also noch im Werk, ein Einstellverfahren durchlaufen wird, während dessen ein Signal der durch den optischen Resonators geführten Strahlung beobachtet wird und abhängig davon manuell eine Einstellung in der Auswerte- und Steuereinheit vorgenommen wird, mit der dann nach dieser Einstellung der Verlauf des Steuersignals festgelegt ist. Alternativ kann die Auswerte- und Steuereinheit auch ausgebildet sein, das Korrektursignal selbsttätig aus der durch den Resonator geführten Strahlung abzuleiten. Beide Möglichkeiten sind von der Erfindung umfasst.

In Weiterbildung der Erfindung ist vorgesehen, dass der optische Resonator nicht immer im Strahlengang vorhanden ist, sondern durch Einschieben oder Einlegen in den Strahlengang bringbar ist. Damit kann die Einstellung für das Korrektursignal manuell oder durch die Auswerte- und Steuereinheit automatisch kontrolliert werden und gegebenenfalls der Verlauf des Korrektursignals optimiert werden. Auf diese Weise kann eine ggf. regelmäßige Überprüfung des Spektrometers erfolgen.

Das erfindungsgemäße Verfahren zum Betreiben eines Wellenlängen-Modulations-Spektrometers umfasst die Schritte nach Anspruch 4.

Erfindungsgemäss wird in der Auswerte- und Steuereinheit das 2f-Signal, aus dem Teil der Strahlung, der den optischen Resonator durchläuft, erzeugt und zur Ableitung des Korrektursignals verwendet.

Im Folgenden wird die Erfindung anhand eines Ausführungsbeispiels unter Bezugnahme auf die Zeichnung im Einzelnen erläutert. In der Zeichnung zeigen:

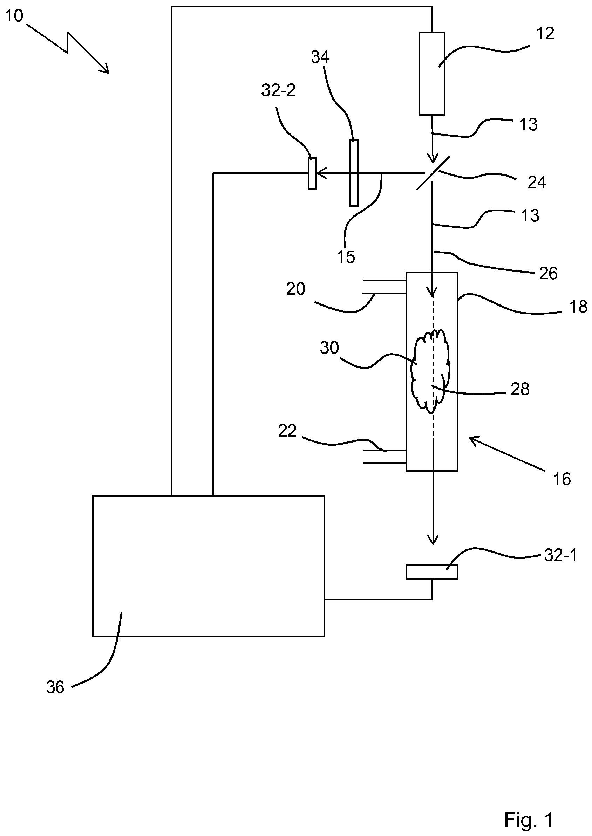

- Fig. 1: eine schematische Darstellung einer Ausführungsform des erfindungsgemäßen Wellenlängen-Modulations-Spektrometers;
- Fig. 2: qualitative, schematische Darstellung der Laseransteuerung im Idealfall;
- Fig. 3: qualitative, schematische Darstellung eines Absorptionssignals im Idealfall;
- Fig. 4: qualitative, schematische Darstellungen der 1f- und 2f- Signale im Idealfall;
- Fig. 5: qualitative, schematische Darstellung der Laseransteuerung im Realfall;
- Fig. 6: qualitative, schematische Darstellung der Änderung der Amplitudenmodulation aus Fig. 5;
- Fig. 7: qualitative, schematische Darstellung des 2f- Signals mit Resonator und mit Laseransteuerung wie in Fig. 5;
- Fig. 8: eine Darstellung der Laseransteuerung wie Fig. 5;
- Fig. 9: Darstellung des 2f- Signals wie in Fig. 7 mit suboptimaler Korrektur der Änderung der Laseransteuerung durch das Korrektursignal;
- Fig. 10: Darstellung des 2f- Signals wie in Fig. 9 mit optimaler Korrektur der Änderung der Laseransteuerung durch das Korrektursignal.

Ein erfindungsgemäßes Wellenlängen-Modulations-Spektrometer 10 weist eine Lichtquelle 12, vorzugsweise einen durchstimmbaren Diodenlaser (tunable diode laser, TDL) auf, wobei der Laser 12 Lichtstrahlen 13 in einem Wellenlängenbereich [λ1, λ2] erzeugt. Weiter weist das WMS-Spektrometer 10 einen Messbereich 16 auf, der aus einer Messzelle 18 mit Messgaseinlass 20 und Messgasauslass 22 gebildet sein kann. Andere Anordnungen, z. B. offene Systeme ("open path") oder an einer Rohrleitung, die das Messgas führt ("cross duct"), angeschlossene Systeme, sind denkbar.

Die Lichtstrahlung 13 des Lasers 12 läuft auf einem optischen Weg 26 und wird in die Messzelle 18 eingekoppelt. Der optische Weg 26 innerhalb der Messzelle 18 bildet eine optische Messstrecke 28.

Der optische Weg kann über einen oder mehrere Reflektoren innerhalb oder außerhalb der Messzelle verlängert werden, zum Beispiel in Form einer White- oder Herriott Zelle, um so eine längere optische Messtrecke zu erhalten.

In die Messzelle 18 kann ein Messgas 30 eingebracht werden, das wenigstens eine zu messende Messgaskomponente umfasst. Aufgrund der Messgaskomponente, die in dem Wellenlängenbereich Licht absorbiert, erfährt das die Messstrecke 28 durchlaufende Licht des Lasers 12 eine Absorption.

Anstelle einer Messzelle kann der optische Weg, in dem das Messgas vorkommt, auch durch eine Prozessgasleitung ("in situ" Messung) oder, beispielsweise in chemischen Anlagen oder in Raffineriegeländen, über eine offene Strecke ("open path") führen. Es ist auch denkbar, dass das Licht über einen Reflektor geführt wird und die Messtrecke mit dem Messgas zumindest ein weiteres Mal durchläuft, bevor es detektiert wird.

Weiter ist ein erster Lichtempfänger 32-1 vorgesehen, der das Licht, das die Messstrecke durchlaufen hat, detektiert. Dies kann eine Photodiode, eine Lawinenphotodiode (Avalanche-Photo-Diode) oder auch ein Photomultiplier (PM) sein. Der Lichtempfänger 32-1 erzeugt in Abhängigkeit des Lichteinfalls ein Empfangssignal.

Das Empfangssignal wird einer Auswerte- und Steuereinheit 36 zur Auswertung zugeführt. Aus dem einen Empfangssignal wird in der Auswerteeinheit 36 letztendlich ermittelt ob die zu messende Messgaskomponente vorhanden ist und ggf. deren Konzentration ermittelt.

Des Weiteren ist ein Teilerspiegel 24 vorgesehen, der in dem Lichtweg 26 zwischen Laser 12 und erstem Empfänger 32-1 angeordnet ist und durch den ein Teil 15 ausgekoppelt wird und einem zweiten Empfänger 32-2 zugeführt wird. Bevor der Teilstrahl 15 auf den zweiten Empfänger 32-2 trifft durchläuft er einen optischen Resonator 34, der vorzugsweise als Etalon ausgebildet ist. Der zweite Empfänger 32-2 liefert ein zweites Empfangssignal, das ebenfalls der Auswerte- und Steuereinheit 36 zur weiteren Auswertung zugeführt ist.

Die Bedeutung der einzelnen Komponenten, deren besondere Ausgestaltungen und Funktionen werden in der folgenden Beschreibung deutlich, wenn die Funktionsweise des erfindungsgemäßen WMS-Spektrometers 10 beschrieben wird. Dabei wird davon ausgegangen, dass die Funktionsweise der WMS, wie sie auch eingangs kurz erläutert wurde, prinzipiell bekannt ist.

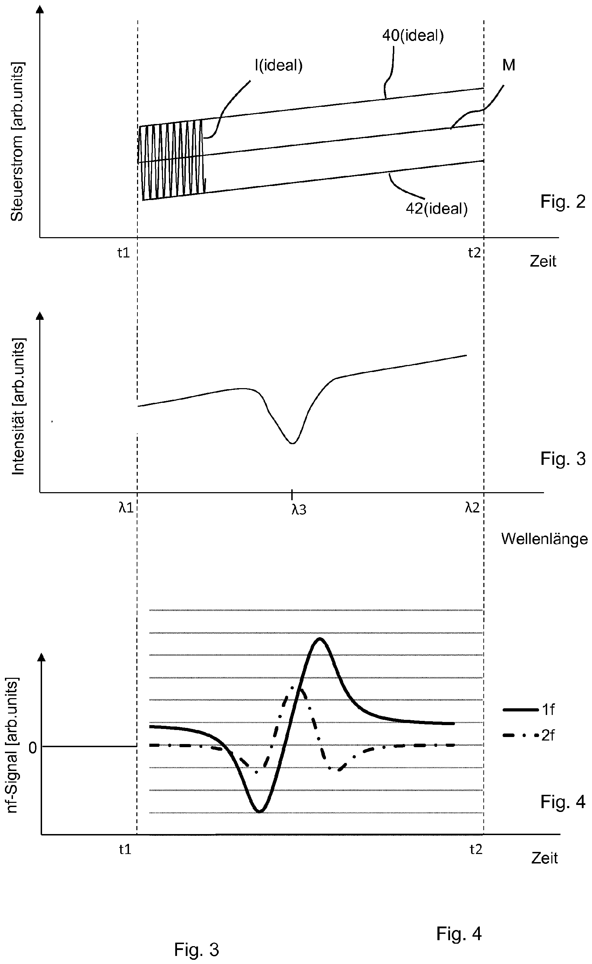

Der durchstimmbare Laser 12 wird mittels der Auswerte- und Steuereinheit 36 angesteuert. Die Ansteuerung erfolgt bei Diodenlasern in der Regel über einen Steuerstrom I(ideal). Entsprechend dem Steuerstrom I(ideal) emittiert der Laser eine bestimmte Wellenlänge, wobei diese den Wellenlängenbereich [λ1, λ2] abdeckt. Die Ansteuerung erfolgt in der WMS typischen Weise, also einem relativ langsamen Durchstimmen über das Intervall von t1 bis t2, wobei dem langsamen Durchstimmen eine höherfrequente Modulation überlagert ist. Dies ist in Fig. 2 schematisch dargestellt. Das Ansteuersignal ist also z. B. eine Ansteuerstromrampe, auf die eine vergleichsweise schnelle Modulation (z. B. im kHz Bereich) aufgeprägt ist. Der besseren Übersicht wegen und auch für folgende Erklärungen sind neben dem nur teilweise und schematisch dargestellten Steuerstrom I(ideal) auch die Einhüllenden 40(ideal) und 42(ideal) sowie der zeitliche Mittelwert M über die höherfrequente Modulation des Steuerstroms dargestellt.

Im Idealfall, der in den Fig. 2, 3 und 4 dargestellt ist, ist die Amplitudenmodulation des Ansteuersignals über den Durchstimmbereich konstant, d. h. die Amplitude der Modulation ändert sich nicht über den Durchstimmbereich. Dann ergibt sich in bekannter Weise im Empfangssignal eine Absorption bei λ3 entsprechend dem Messgas und daraus die sich ergebenden nf-Signale, von denen in Fig. 4 das 1f-Signal und das 2f-Signal dargestellt sind. Die Auswertung der nf-Signale erfolgt dann in von der WMS bekannten Art und Weise.

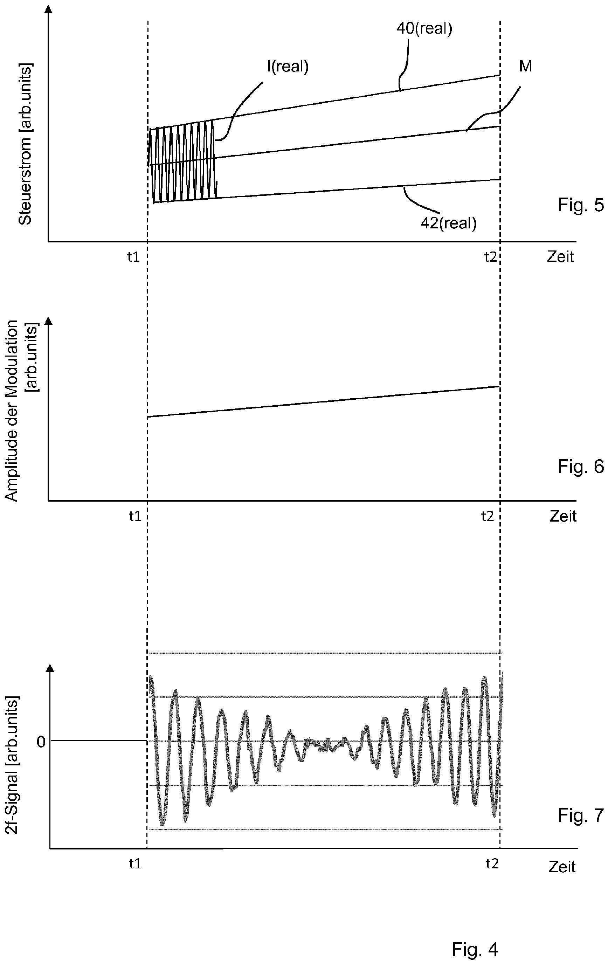

In der Realität ist die Amplitudenmodulation über den Durchstimmbereich aber nicht konstant, d. h. die Amplitude ändert sich über den Bereich. Wie die Amplitude sich ändert ist abhängig vom eingesetzten Laser und ist individuell. In Fig. 5 und 6 ist beispielhaft eine mögliche Änderung der Amplitude dargestellt. Hier ist die Änderung linear, also von t1 (entsprechend λ1) bis t2 (entsprechend λ2) wird die Amplitude kontinuierlich größer. Dies soll insbesondere an den beiden Einhüllenden 40(real) und 42(real) und deren Differenz, die der Amplitude entspricht und die in Fig. 6 dargestellt ist, veranschaulicht sein.

Eine wesentliche Erkenntnis der Erfindung spiegelt sich in Fig. 7 wieder. Fig. 7 zeigt ein 2f-Signal, das sich ergibt, wenn man den Empfang auf dem zweiten Empfänger 32-2 auswertet. Der zweite Empfänger 32-2 empfängt das Licht 15, das den optischen Resonator 34 durchlaufen hat. Eigentlich, also im Idealfall, sollte das 2f-Signal über die gesamte Stromrampe Null sein, denn auf dem zweiten Empfänger wird das Licht aus dem Laser direkt, also ohne Durchtritt durch das Messgas, also ohne Absorption im Bereich [λ1, λ2], empfangen und die Modulation des Laserstroms sollte so gewählt sein, dass der Effekt des optischen Resonators 34 nicht sichtbar wird. Im Realfall aber tritt eine sinusartige Modulation des Signals durch den optischen Resonator 34 auf, die an einer Stelle im Durchstimmbereich verschwindet. Diese Stelle liegt im Ausführungsbeispiel der Fig. 7 in etwa in der Mitte. Es wurde erkannt, dass diese sinusartige Modulation von der Änderung der Amplitudenmodulation des Steuerstroms I abhängt.

Deshalb ist nun nach der Erfindung vorgesehen, aus der durch den Resonator 34 geführten Strahlung 15 ein Korrektursignal abzuleiten. Dieses Korrektursignal wird dann dazu benutzt, das Ansteuersignal I(real) - genauer gesagt, die Amplitude der höherfrequenten Modulation - während des Durchstimmens so einzustellen, also entlang der Stromrampe in Abhängigkeit des Korrektursignals so zu verändern, dass im 2f-Signal die Modulation möglichst klein ist und im besten Fall verschwindet.

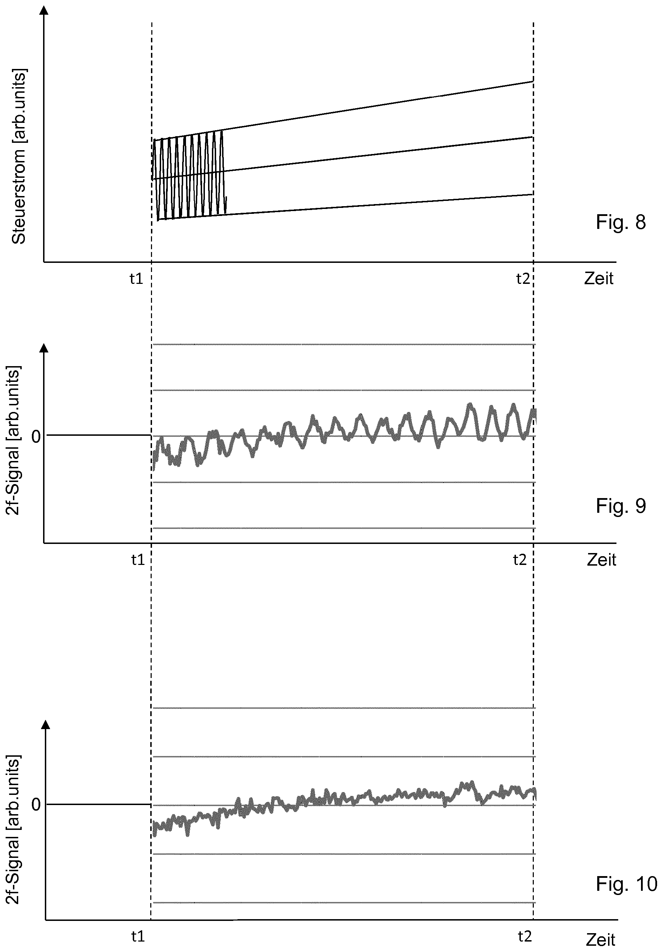

In den Fig. 9 und 10 sind Ergebnisse dargestellt, die einmal einer suboptimalen Einstellung des Korrektursignals entsprechen (Fig. 9) und einmal einer fast optimalen Einstellung (Fig. 10), nach der das 2f-Signal innerhalb eines Toleranzbereiches mehr oder weniger auf Null liegt.

Es soll dabei erwähnt sein, dass das Korrektursignal kein konstantes Signal sein muss, sondern dass es eine Funktion in Abhängigkeit von der Durchstimmbereichsvariable, also der Zeit bzw. Emissionswellenlänge, sein könnte. Das Korrektursignal könnte also auch einen bestimmten Verlauf über den Durchstimmbereich aufweisen. Mit dem Korrektursignal wird also erreicht, dass die Amplitudenmodulation über den Durchstimmbereich konstant gehalten werden kann und die Wellenlängenamplitude sich somit nicht ändert.

Dabei kann das Korrektursignal einmalig ab Werk eingestellt werden. Diese Einstellung kann manuell erfolgen, zum Beispiel über entsprechende Einstellmöglichkeiten, wie Potentiometer oder Softwareparameter, in die Auswerte- und Steuereinheit eingegeben werden. In einer solchen Einstellung wird das Korrektursignal solange geändert, bis das Signal des zweiten Empfängers 32-2 optimal dem idealen Verlauf angenähert ist.

Alternativ kann die Auswerte- und Steuereinheit 36 auch ausgebildet sein, das Korrektursignal selbsttätig aus der durch den Resonator 34 geführten Strahlung abzuleiten. Eine entsprechend intelligente Software muss dazu in der Auswerte- und Steuereinheit 36 hinterlegt sein.

Diese Möglichkeit der Einstellung der Amplitudenmodulation, um optimale WMS-Signale zu erhalten, kann auch für die wiederkehrende Überprüfung der Einstellungen des Spektrometers herangezogen werden. Bei Vorliegen eines nicht-optimalen Signals am zweiten Empfänger 32-2 muss dann eine Neueinstellung des Korrektursignals vorgenommen werden. Dies kann wiederrum manuell oder automatisch durch die Auswerte- und Steuereinheit 36 erfolgen.

Mit der Erfindung hat man einen einfachen und mit wenig Aufwand realisierbaren Weg gefunden, um über die Steuerung des Ansteuerstroms für den Laser, die sonst auftretende Änderung der Wellenlängenmodulation zu vermeiden.

Beispielhaft ist auch eine Ausführungsform denkbar, bei der auf den zweiten Empfänger 32-2 verzichtet werden kann. Dann kann auch auf den Strahlteiler 24 verzichtet werden. Entweder wird der optische Resonator 34 für die Einstellungsprozedur in den Strahlengang 13 eingeschwenkt oder geschoben oder er verbleibt im Strahlengang. Zum erfindungsgemäßen Einstellen der Korrektur für den Ansteuerstrom des Lasers wird dann ohne Messgas im Strahlengang die beschriebene erfindungsgemäße Einstellung vorgenommen. Zur Kontrolle kann der Einstellvorgang in regelmäßigen Wartungsabständen wiederholt werden. Da das Korrektursignal im optimierten Zustand keine Modulation durch den optischen Resonator 34 aufweist, wird die Messung durch den Verbleib des optischen Resonators 34 im Strahlengang 13 nicht gestört.

## Patentansprüche

1. Wellenlängen-Modulations-Spektrometer mit
- einer Lichtquelle (12), die Lichtstrahlung (13) in einem Wellenlängenbereich ([λ1, λ2]) erzeugt,
- einer Messstrecke (28) im Strahlengang der Lichtstrahlung (13) in der eine zu messende Messgaskomponente vorliegt,
- einem ersten Lichtempfänger (32-1) zum Empfang der die Messstrecke (28) durchlaufenen Strahlung (13) und zum Erzeugen eines Empfangssignals in Abhängigkeit der empfangenen Strahlung (13),
- einer Auswerte- und Steuereinheit (36) zum Ansteuern der Lichtquelle (12) mittels eines die Emissionswellenlänge der Lichtquelle (12) bestimmenden Ansteuersignals (I), wobei das Ansteuersignal (I) eine langsam veränderliche Komponente und eine überlagerte, höherfrequente Modulation aufweist und zum Auswerten des Empfangssignals nach der Methode der Wellenlängen-Modulations-Spektroskopie und zur Erzeugung eines nf-Signals und daraus Detektion der Messgaskomponente,
- einen optischen Resonator (34), durch den wenigstens ein Teil (15) der Strahlung geführt ist, wobei dieser Teilstrahl (15) das Messgas nicht durchtritt,
- einen zweiten Lichtempfänger (32-2), der den Teilstrahl (15) nach dem Durchlaufen des optischen Resonators empfängt,
- und dass die Auswerte- und Steuereinheit (36) dazu ausgebildet ist, aus der durch den Resonator (34) geführten und vom zweiten Lichtempfänger (32-2) empfangenen Teilstrahl (15) ein Korrektursignal abzuleiten,
- **dadurch gekennzeichnet, dass** die Auswerte- und Steuereinheit (36) weiter ausgebildet ist, das Ansteuersignal in Abhängigkeit des Korrektursignals zum Einstellen der Amplitude der höherfrequenten Modulation über den Wellenlängenbereich zu verändern, und,
dass für die Ableitung des Korrektursignals das 2f-Signal, das aus dem Teil (15) der Strahlung gewonnen wird, der den optischen Resonator (34) durchläuft, als Maßstab dient.

2. Spektrometer nach Anspruch 1, **dadurch gekennzeichnet, dass** die Auswerte- und Steuereinheit (36) ausgebildet ist, das Korrektursignal selbsttätig aus der durch den Resonator (34) geführten Strahlung abzuleiten.

3. Spektrometer nach einem der vorhergehenden Ansprüche, **dadurch gekennzeichnet, dass** ein Strahlteiler im Strahlengang vorgesehen ist und ein Teilstrahl in den optischen Resonator geführt ist.

4. Verfahren zum Betreiben eines Wellenlängen-Modulations-Spektrometer (10) nach einem der vorhergehenden Ansprüche, mit den Schritten:
- Erzeugen von Lichtstrahlung (13) in einem Wellenlängenbereich ([λ1, λ2]) mit einer Lichtquelle (12),
- Führen des Strahlengangs der Lichtstrahlung (13) in eine Messstrecke (28), in der eine zu messende Messgaskomponente vorliegt,
- Empfangen der die Messstrecke (28) durchlaufenen Strahlung mit einem ersten Lichtempfänger (32-1) und Erzeugen eines Empfangssignals in Abhängigkeit der empfangenen Strahlung,
- Ansteuern der Lichtquelle (12) mittels eines die Emissionswellenlänge der Lichtquelle (12) bestimmenden Ansteuersignals (I), wobei das Ansteuern sich aus Durchstimmen einer langsam veränderlichen Komponente und einer überlagerten, höherfrequenten Modulation zusammensetzt,
- und Auswerten des Empfangssignals nach der Methode der Wellenlängen-Modulations-Spektroskopie und zur Erzeugung eines nf-Signals und daraus Detektion der Messgaskomponente mit einer Auswerte- und Steuereinheit (36),
- Auskoppeln eines Teilstrahls (15) von der Lichtstrahlung (23) mit einem Strahlteiler (24) und Führen der Teilstrahlung (15) in den optischen Resonator (34),
- Führen des wenigstens einen Teils (15) der Strahlung durch den optischen Resonator (34) wobei dieser Teilstrahl (15) das Messgas nicht durchtritt,
- Empfangen des Teilstrahls (15) nach dem Durchlaufen des optischen Resonators (34) mit einem zweiten Lichtempfänger (32-2) und Erzeugen eines Korrektursignals
**gekennzeichnet durch**
- Verändern des Ansteuersignals (I) in Abhängigkeit des Korrektursignals während des Durchstimmens zum Einstellen der Amplitude der höherfrequenten Modulation wobei,
- das Korrektursignal aus dem 2f-Signal, das aus dem Teil der Strahlung gewonnen wird, der den optischen Resonator durchläuft, abgeleitet wird,.

5. Verfahren nach Anspruch 4 **dadurch gekennzeichnet, dass** die Ableitung des Korrektursignals in einem Einstellverfahren erfolgt.

## Claims

1. Wavelength modulation spectrometer having
- a light source (12), which generates light radiation (13) in a wavelength range (λ1, λ2),
- a measuring section (28) in the beam path of the light radiation (13) in which a sample gas component to be measured is present,
- a first light receiver (32-1) for receiving the radiation (13) passing through the measuring section (28) and for generating a reception signal in dependence on the received radiation (13),
- an evaluation and control unit (36) for driving the light source (12) by means of a drive signal (I) determining the emission wavelength of the light source (12), the drive signal (I) having a slowly variable component and a superimposed, higher-frequency modulation, and for evaluating the received signal according to the method of wavelength modulation spectroscopy and for generating an nf signal and detecting the sample gas component therefrom,
- an optical resonator (34) through which at least a part (15) of the radiation is passed, this partial beam (15) not passing through the sample gas,
- a second light receiver (32-2) which receives the partial beam (15) after passing through the optical resonator,
- and in that the evaluation and control unit (36) is designed to derive a correction signal from the partial beam (15) guided through the resonator (34) and received by the second light receiver (32-2),
**characterized in that** the evaluation and control unit (36) is further adapted to change the drive signal in dependence on the correction signal for adjusting the amplitude of the higher-frequency modulation over the wavelength range, and **in that** the 2f signal obtained from the part (15) of the radiation which passes through the optical resonator (34) serves as the scale for deriving the correction signal.

2. Spectrometer according to claim 1, **characterized in that** the evaluation and control unit (36) is designed to automatically derive the correction signal from the radiation passed through the resonator (34).

3. Spectrometer according to one of the preceding claims, **characterized in that** a beam splitter is provided in the beam path and a partial beam is guided into the optical resonator.

4. A method of operating a wavelength modulation spectrometer (10) according to any of the preceding claims, comprising the steps of
- generating light radiation (13) in a wavelength range (λ1, λ2) with a light source (12),
- guiding the light beam (13) into a measuring section (28) in which a sample gas component to be measured is present,
- receiving the radiation passing through the measuring section (28) with a first light receiver (32-1) and generating a received signal in dependence on the received radiation,
- driving the light source (12) by means of a drive signal (I) determining the emission wavelength of the light source (12), the driving being composed of tuning a slowly variable component and a superimposed, higher-frequency modulation,
- and evaluating the received signal according to the method of wavelength modulation spectroscopy and for generating an nf-signal and detecting the sample gas component therefrom with an evaluation and control unit (36),
- uncoupling a partial beam (15) from the light radiation (23) with a beam splitter (24) and guiding the partial beam (15) into the optical resonator (34),
- guiding of at least one part (15) of the radiation through the optical resonator (34), whereby this partial beam (15) does not pass through the sample gas,
- receiving the partial beam (15) after passing through the optical resonator (34) with a second light receiver (32-2) and generating a correction signal
**characterized by**
- changing the drive signal (I) depending on the correction signal during tuning to adjust the amplitude of the higher frequency modulation
wherein
- the correction signal is derived from the 2f signal obtained from the part of the radiation that passes through the optical resonator.

5. Method according to claim 4, **characterized in that** the derivation of the correction signal is carried out in a teach-in process.

## Revendications

1. Spectromètre à modulation de longueur d'onde ayant
- une source de lumière (12), qui génère un rayonnement lumineux (13) dans une région de longueurs d'onde (λ1, λ2),
- une section de mesure (28) dans le trajet du faisceau du rayonnement lumineux (13) dans laquelle se trouve un composant gazeux échantillon à mesurer,
- un premier récepteur de lumière (32-1) pour recevoir le rayonnement (13) passant par la section de mesure (28) et pour générer un signal de réception en fonction du rayonnement reçu (13),
- une unité d'évaluation et de commande (36) pour commander la source de lumière (12) au moyen d'un signal de commande (I) déterminant la longueur d'onde d'émission de la source de lumière (12), le signal de commande (I) ayant une composante à variation lente et une modulation superposée à fréquence plus élevée, et pour évaluer le signal reçu selon le procédé de spectroscopie à modulation de longueur d'onde et pour générer un signal nf et en détecter la composante de gaz échantillon,
- un résonateur optique (34) dans lequel passe au moins une partie (15) du rayonnement, ce faisceau partiel (15) ne passant pas à travers le gaz échantillon,
- un second récepteur de lumière (32-2) qui reçoit le faisceau partiel (15) après être passé par le résonateur optique,
- et en ce que l'unité d'évaluation et de contrôle (36) est conçue pour dériver un signal de correction du faisceau partiel (15) guidé à travers le résonateur (34) et reçu par le second récepteur de lumière (32-2),
**caractérisé en ce que** l'unité d'évaluation et de commande (36) est en outre adaptée pour modifier le signal d'entraînement en fonction du signal de correction afin d'ajuster l'amplitude de la modulation de fréquence supérieure sur la région de longueur d'onde,
et **en ce que** le signal 2f obtenu à partir de la partie (15) du rayonnement qui passe à travers le résonateur optique (34) sert d'échelle pour la dérivation du signal de correction.

2. Spectromètre selon la revendication 1, **caractérisé en ce que** l'unité d'évaluation et de contrôle (36) est conçue pour dériver automatiquement le signal de correction du rayonnement passé à travers le résonateur (34).

3. Spectromètre selon l'une des revendications précédentes, **caractérisé en ce qu'**un séparateur de faisceau est prévu dans le trajet du faisceau et un faisceau partiel est guidé dans le résonateur optique.

4. Procédé de fonctionnement d'un spectromètre à modulation de longueur d'onde (10) selon l'une des revendications précédentes, comprenant les étapes suivantes
- générer un rayonnement lumineux (13) dans une région de longueurs d'onde (λ1, λ2) avec une source de lumière (12),
- guider le faisceau lumineux (13) dans une section de mesure (28) dans laquelle se trouve un composant de gaz échantillon à mesurer,
- recevoir le rayonnement traversant la section de mesure (28) avec un premier récepteur de lumière (32-1) et générer un signal reçu en fonction du rayonnement reçu,
- la commande de la source lumineuse (12) au moyen d'un signal de commande (I) déterminant la longueur d'onde d'émission de la source lumineuse (12), la commande étant composée de l'accord d'une composante à variation lente et d'une modulation superposée à fréquence plus élevée,
- et d'évaluer le signal reçu selon la méthode de la spectroscopie à modulation de longueur d'onde et pour générer un signal nf et en détecter la composante gazeuse de l'échantillon à l'aide d'une unité d'évaluation et de contrôle (36),
- découpler un faisceau partiel (15) du rayonnement lumineux (23) à l'aide d'un séparateur de faisceau (24) et guider le faisceau partiel (15) dans le résonateur optique (34),
- guider d'au moins une partie (15) du rayonnement à travers le résonateur optique (34), ce faisceau partiel (15) ne passant pas à travers le gaz échantillon,
- recevoir le faisceau partiel (15) après être passé par le résonateur optique (34) avec un second récepteur de lumière (32-2) et générer un signal de correction
**caractérisé par**
- modifier le signal d'entraînement (I) en fonction du signal de correction pendant le réglage pour ajuster l'amplitude de la modulation de fréquence supérieure où le signal de correction est dérivé du signal 2f obtenu à partir de la partie du rayonnement qui passe à travers le résonateur optique.

5. Procédé selon la revendication 4, **caractérisé en ce que** la dérivation du signal de correction est effectuée dans un processus d'apprentissage .
